# EUROPÄISCHE PATENTANMELDUNG

(11) **EP 2 713 007 A1**
(43) Veröffentlichungstag der Anmeldung: **02.04.2014**
(21) Anmeldenummer: 12186771.7
(22) Anmeldetag: 01.10.2012
(51) Int. Cl.: F01D 5/00

(54) **Reparatur von Bauteilkanten mittels PSP-Elementen und Bauteil**

(71) Anmelder: Siemens Aktiengesellschaft, 80333 München (DE)
(72) Erfinder: Möllenbeck, Peter, 12161 Berlin Tempelhof-Schöneberg (DE); Reinkensmeier, Ingo, 58730 Fröndenberg (DE)

(57) **Zusammenfassung**

Durch die Verwendung von PSP-Elementen können Schaufelkanten (412) einfach repariert werden, indem das PSP-Element (7) großflächig um die Beschädigung (4) verlötet wird.

## Beschreibung

Die Erfindung betrifft die Reparatur von Bauteilkanten mittels PSP-Elementen und ein Bauteil.

Schaufelspitzen oder Schaufelabströmkanten weisen durch Flammenrückschlag mechanischen oder abrasiven Abtrag Beschädigungen auf, die repariert werden können.

Bisher erfolgte dies durch einen sehr aufwändigen Austausch der Turbinenschaufeln oder bei Swirlern durch Austausch einzelner Swirler-Elemente.

Es ist daher Aufgabe der Erfindung oben genanntes Problem zu vereinfachen.

Die Aufgabe wird gelöst durch ein Verfahren gemäß Anspruch 1 und ein Bauteil gemäß Anspruch 10.

In den Unteransprüchen sind weitere vorteilhafte Maßnahmen aufgelistet, die beliebig miteinander kombiniert werden können, um weitere Vorteile zu erzielen.

Es zeigen:
- Figur 1 - 6: Darstellungen der Erfindung,
- Figur 7: perspektivisch eine Turbinenschaufel,
- Figur 8: eine Liste von Superlegierungen.

Die Figuren und die Beschreibung stellen nur Ausführungsbeispiele der Erfindung dar.

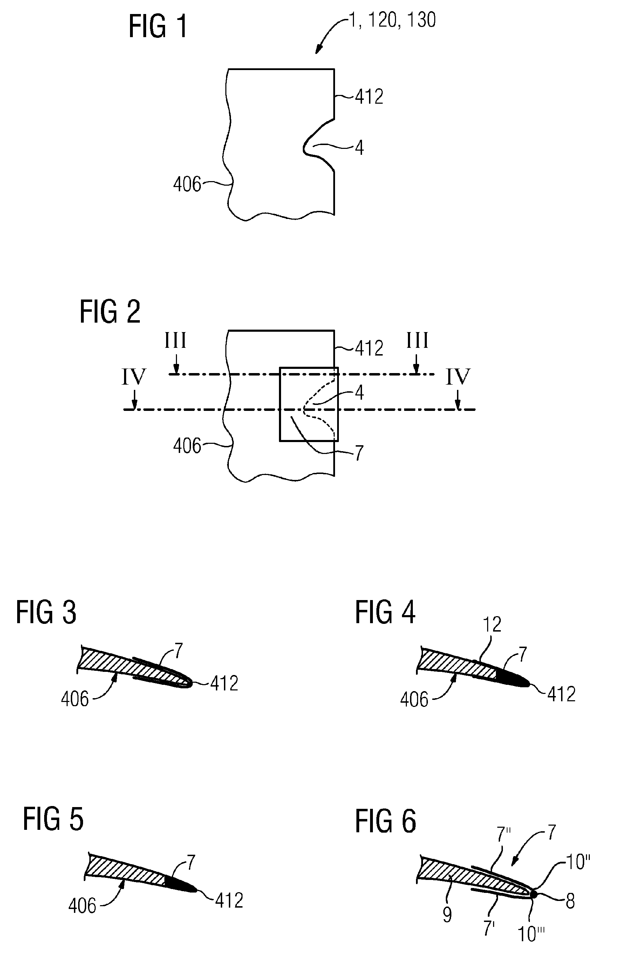

In Figur 1 ist ein Schaufelblatt 406 einer Turbinenschaufel 120, 130 als ein beispielhaftes Bauteil 1 gezeigt, das im Bereich seiner Kante 412, hier die Abströmkante, eine Beschädigung 4 aufweist.
Die Kante 412 ist vorzugsweise spitz, d. h. sie weist einen spitzen Winkel zwischen ihren Schenkeln auf.
Die Beschädigung 4 kann ein Riss sein oder eine größere Aussparung (Kante ist stellenweise weggebrochen) sein.

Figur 2 zeigt ein PSP-Element 7 (PreSintered Preform), das um die Beschädigung 4 herum, auf beiden Seiten (Fig. 3, 4, 6) vorhanden ist.

Das PSP-Element 7 ist insbesondere flach und quaderförmig ausgebildet.
Zur Abdeckung der beiden Seiten um die Kante 412 werden insbesondere zwei PSP-Elemente verwendet, die in geeigneter Form, wie insbesondere durch eine Schweißung an einer ihrer Längskanten 8 (Fig. 6) miteinander verbunden sind und so um die Beschädigung 4 aufgelegt werden.

Ebenso ist es denkbar, eine Folie, die noch gesintert wird, um ein PSP-Element 7 zu erhalten und somit biegsam ist, vor dem Sintern im biegsamen Zustand um die Beschädigung 4 oder auf das Bauteil 1 gelegt wird und dann getrennt davon gesintert wird, wobei sich dann der hier beschriebene Lötvorgang anschließt.

Ebenso kann mit einer noch nicht gesinterten Vorform eines PSP-Elements 7 die entsprechend benötigte Biegung an einem Modell, das dem Bauteil 1 entspricht, an der entsprechenden Stelle erzeugt werden und die Vorform des PSP-Elements 7 wird in der gebogenen Form gesintert und dann um die Kante 412 oder auf das Bauteil 1 aufgebracht und weiterverarbeitet.

Das PSP-Element 7 ist in der Fläche größer als die Beschädigung 4 oder als die bearbeitete Beschädigung 4 ausgebildet und überdeckt die Beschädigung 4. Das PSP-Element 7 liegt also auf der Oberfläche 406 des Bauteils 1, 120, 130 auf.

Das PSP-Element 7 weist vorzugsweise ein Gemisch aus Grundwerkstoff und Lotpulver in vorgegebenen, variierbaren Gemischverhältnissen auf. Das Lotpulver weist daher einen niedrigeren Schmelzpunkt als den des Grundwerkstoffs auf, insbesondere ist er um mindestens 10K, ganz insbesondere um mindestens 20K niedriger.

Das PSP-Element 7 kann durch verschiedene Methoden an der Schaufel 120, 130 befestigt werden, bevor es bei geeigneter Temperatur mit dem Schaufelblatt 406 verlötet wird.

Figur 3 zeigt einen Querschnitt entlang der Linie III-III der Figur 2, anhand dessen man erkennen kann, dass das PSP-Element 7 auf beiden Seiten (hier Saug- und Druckseite) um die Schaufelspitze 412 vorhanden ist.

Figur 4 zeigt einen Querschnitt entlang der Linie IV-IV gemäß Figur 2, dort wo die Beschädigung 4 ist.
Das PSP-Element 7 ist so dick ausgebildet, dass es beim Löten im Bereich der Beschädigung 4 das erodierte Material mehr als vollständig ersetzt und beim Zusammenschrumpfen aber immer noch so dick ist, dass es die gewünschten Soll-Wanddicken eines Neu-Bauteils erreicht.
Vorzugsweise wird das PSP-Element 7 vor dem Löten im Bereich der Schädigung 4 zusammengedrückt, so dass sich das PSP-Element dort berührt.

Dann wird nach dem Löten ein Rekonturieren des aufgelöteten PSP-Elements 7 durchgeführt.
Nach der Bearbeitung (Fig. 5, ausgehend von Fig. 4) weist die Abströmkante 412 und die Oberfläche 406 wieder die Originalkontur auf und restliches Lotmaterial 12 des PSP-Elements 7 im Bereich der Abströmkante 412 auf.

Die Figur 6 zeigt, wie man ein solches PSP-Element 7, das um eine Kante 412 gelegt wird, am einfachsten herstellt wird. PSP-Elemente 7', 7" sind vorzugsweise flach und/oder quaderförmig ausgebildet und starr.
Ein PSP-Element 7 gemäß Figur 2 oder 3 wird aus zwei einzelnen flachen PSP-Elementen 7", 7"' hergestellt, indem sie an einem Ende 10", 10"' miteinander verbunden, insbesondere durch Löten, ganz insbesondere verschweißt werden, so dass dort eine Verbindungsstelle 8 oder Schweißstelle 8 vorhanden ist.

Dieses im Querschnitt v-förmige Element 7 kann dann um die Hinterkante 412 des Bauteils 1, 120, 130 gelegt werden, die in der Regel bis in die Tiefe der Beschädigung 7 nicht besonders stark gekrümmt ist, so dass sich beim Löten das PSP-Element 7', 7", da es dann weich wird, sich an die leicht konkave oder leicht konvexe Form des Bereichs um die Kante 412 anlegt.

Optional kann ein Modell 9 für die Vorfertigung der zu verbindenden PSP-Elemente 7', 7" verwendet werden, das die Krümmung- und Geometrieverhältnisse der Hinterkante 412 darstellt, so dass das PSP-Element 7 aus den zwei einzelnen PSP-Elementen 7', 7" optimal und passgenau hergestellt wird.

Ebenso können die zwei PSP-Elemente 7', 7" durch äußere Halteelemente, wie z.B. durch eine Klammer, auf der Oberfläche 406 um die Beschädigung 4 zusammen gehalten werden.

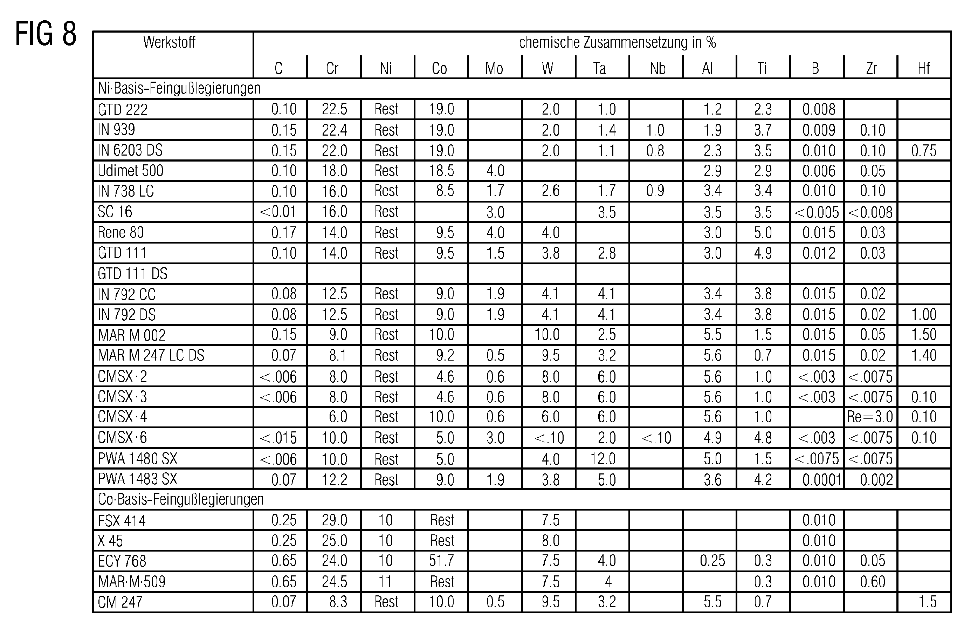

Die Turbinenschaufel 120, 130 ist vorzugsweise aus einer nickelbasierten Superlegierung, insbesondere aus einer Legierung gemäß Figur 8.

Die Vorteile des Verfahrens liegen in der kurzen Wiederherstellungszeit, außerdem entstehen keine Schweißschrümpe, es ist kein Richten notwendig und insbesondere bei Schaufeln von Swirlern können diese im Verbund bleiben und brauchen nicht abgetrennt werden.

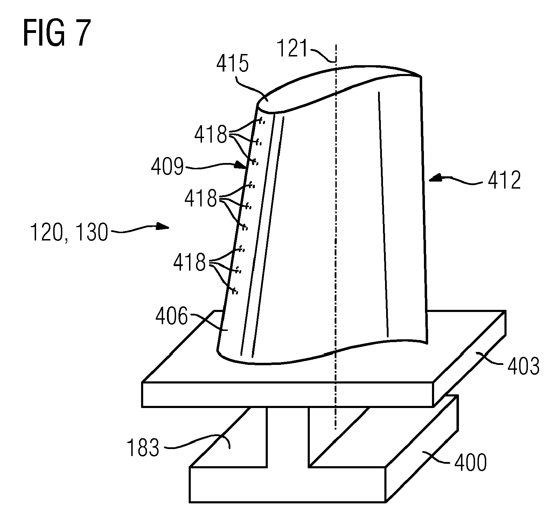

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0, 6Y-0, 7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren
zur Reparatur einer Kante,
insbesondere einer spitzen Kante (412),
eines Bauteils (1),
insbesondere einer Turbinenschaufel (120, 130),
wobei die Kante (412) zumindest eine Beschädigung (4) aufweist,
bei dem auf die Oberfläche (406) um die Beschädigung (4) zwei streifenförmige PSP-Elemente (7', 7") gelegt werden, die (7', 7") mit dem Bauteil (1, 120, 130) verlötet werden.

2. Verfahren nach Anspruch 1,
bei dem die PSP-Elemente (7', 7") flache, quaderförmige PSP-Elemente darstellen.

3. Verfahren nach einem oder beiden der Ansprüche 1 oder 2, wobei die PSP-Elemente (7', 7") an einem Ende (10', 10") miteinander verbunden,
insbesondere verschweißt,
werden.

4. Verfahren nach Anspruch 3,
bei dem die zwei PSP-Elemente (7", 7"') vor dem Aufbringen auf das Bauteil (1, 120, 130) zum Verbinden auf eine Form (9) angelegt werden,
die (9) der Geometrie im Bereich der Kante (412) des zu reparierenden Bauteils (1, 120, 130) entspricht.

5. Verfahren nach einem oder mehreren der Ansprüche 1, 2 ,3 oder 4,
bei dem die Beschädigung (4) vorab gereinigt und/oder bearbeitet,
insbesondere beschliffen,
wird.

6. Verfahren nach einem oder mehreren der Ansprüche 1, 2, 3, 4 oder 5,
bei dem die PSP-Elemente (7, 7', 7") nach dem Löten an das Bauteil (120, 130) bearbeitet werden.

7. Verfahren nach einem oder mehreren der Ansprüche 1, 2, 3, 4, 5 oder 6,
bei dem die PSP-Elemente (7', 7") ein Gemisch aus dem Grundwerkstoff des Bauteils (1, 120, 130) und
einem anderen Pulver aufweisen,
das einen niedrigeren Schmelzpunkt,
insbesondere um mindestens 10K niedriger,
als das Material des Grundwerkstoffes aufweist.

8. Verfahren nach einem oder mehreren der Ansprüche 1, 2, 3, 4, 5, 6 oder 7,
bei dem die PSP-Elemente (7', 7") um die Kante (412) des Bauteils (1, 120, 130) auf beide Seiten der Kante (412) aufgelegt werden und
die Beschädigung (4) vollständig überdecken.

9. Verfahren nach einem oder mehreren der Ansprüche 1, 2, 3, 4, 5, 6, 7 oder 8,
bei dem eine Kante (412) repariert wird,
die teilweise weggebrochen ist.

10. Repariertes Bauteil (1, 120, 130),
mit PSP-Element (7, 7', 7"),
insbesondere hergestellt nach einem oder mehreren der vorherigen Ansprüche.

11. Bauteil nach Anspruch 10,
bei dem im Bereich der reparierten Schädigung (4) das Bauteil (1, 120, 130) nur aus dem Material des PSP-Elementes (7) besteht.
